# EUROPÄISCHE PATENTSCHRIFT

(11) **EP 2 633 173 B1**
(45) Veröffentlichungstag und Bekanntmachung des Hinweises auf die Patenterteilung: **09.11.2016**
(21) Anmeldenummer: 11763707.4
(22) Anmeldetag: 30.09.2011
(51) Int. Cl.: F02D 41/20, F02D 41/22, H01F 7/18, F02D 41/24

(54) **VERFAHREN UND VORRICHTUNG ZUR ANSTEUERUNG EINES INJEKTORS IN EINER KRAFTSTOFFEINSPRITZANLAGE EINER BRENNKRAFTMASCHINE**
METHOD AND DEVICE FOR ACTUATING AN INJECTOR IN A FUEL INJECTION SYSTEM OF AN INTERNAL COMBUSTION ENGINE
PROCÉDÉ ET DISPOSITIF POUR COMMANDER UN INJECTEUR DANS UN SYSTÈME D'INJECTION DE CARBURANT D'UN MOTEUR À COMBUSTION INTERNE

(30) Priorität: 25.10.2010 DE 102010042853
(43) Veröffentlichungstag der Anmeldung: 04.09.2013
(73) Patentinhaber: Robert Bosch GmbH, 70442 Stuttgart (DE)
(72) Erfinder: HAMEDOVIC, Haris, 71696 Moeglingen (DE); FISCHER, Wolfgang, 70839 Gerlingen (DE); SEULING, Silke, 71686 Remseck/Neckar (DE)
(86) Internationale Anmeldenummer: PCT/EP2011/067077
(87) Internationale Veröffentlichungsnummer: WO 2012/055667

(56) Entgegenhaltungen:
- DE-A1-102007 019 099
- DE-A1-102008 060 928
- DE-A1-102009 009 270
- US-A1- 2003 080 288

## Beschreibung

### Stand der Technik

Die Erfindung geht aus von einer Vorrichtung und einem Verfahren nach der Gattung der unabhängigen Ansprüche.

Aus der DE 10 2009 003 211 oder DE10 2008 060 928 ist ein Verfahren zur Ansteuerung eines Injektors in einer Kraftstoffeinspritzanlage einer Brennkraftmaschine bekannt. Bei dem dort beschriebenen Verfahren und der dort beschriebenen Vorrichtung wird mittels eines Kalibrierverfahrens, ausgehend von einer Ansteuergröße ein den Einspritzvorgang charakterisierenden Injektorgröße ermittelt. Ausgehend von dieser Injektorkenngröße wird dann ein Merkmal zur Kalibrierung des Injektors bestimmt.

Da eine solche Kalibrierung die Einspritzung von Kraftstoff beeinflusst und damit werden indirekt die Abgasemissionen verändert, ist es in vielen Ländern erforderlich, dass dieses Verfahren auf seine Funktionsfähigkeit hin überwacht wird.

### Offenbarung der Erfindung

### Vorteile der Erfindung

Das erfindungsgemäße Verfahren und die erfindungsgemäße Vorrichtung mit den Merkmalen der unabhängigen Ansprüche hat gegenüber dem Stand der Technik den Vorteil, dass die Funktionsfähigkeit des Kalibrierverfahrens sicher überwacht werden kann.

Besonders vorteilhaft dabei ist, dass mittels eines ersten Kalibrierverfahrens ausgehend von einer Ansteuerkenngröße eine den Einspritzvorgang charakterisierende Injektorkenngröße ermittelt wird, und dass ausgehend von dieser Kenngröße ein erstes Merkmal zur Kalibrierung des Injektors bestimmt wird und dass ein zweites Kalibrierverfahren ausgehend von einer Motorkenngröße ein zweites Merkmal zur Kalibrierung des Injektors bestimmt wird und das ausgehend von dem zweiten Merkmal das erste Kalibrierverfahren überwacht wird. Dies bedeutet es werden mittels zweier Verfahren Merkmale bestimmt, die zur Kalibrierung von Injektoren verwendet werden können. Dadurch kann ein Fehler bei einem der Kalibrierverfahren erkannt werden.

Bei einer ersten Ausführungsform erfolgt zuerst eine Kalibrierung mittels des ersten Kalibrierverfahrens. Wobei die ermittelten Merkmale zur Korrektur der Ansteuerung verwendet werden. Ein Fehler wird erkannt, wenn das zweite Merkmal (M2) des zweiten Kalibrierverfahrens größer als ein Schwellenwert ist. Dies bedeutet, erkennt das zweite Kalibrierverfahren nach erfolgter Kalibrierung durch das erste Verfahren noch, dass eine weitere Kalibrierung nötig ist, so wird ein Fehler erkannt. Hierbei vereinfacht sich der Aufwand bei dem zweiten Verfahren, da nur erkannt werden muss, ob eine Kalibrierung erforderlich ist. Die Merkmale müssen weniger aufwendig bestimmt werden.

Bei einer zweiten Ausführungsform ist dabei vorgesehen, dass ein Fehler erkannt wird, wenn die beiden Merkmale um mehr als ein Schwellenwert voneinander abweichen. Dies bedeutet, ein Fehler wird erkannt, wenn die beiden Kalibrierverfahren unterschiedliche Werte zur Korrektur liefern.

Bei der Ansteuergröße handelt es sich bevorzugt um den Strom, der durch den Injektor fließt oder die Spannung, die am Injektor anliegt, handelt. Diese Größen sind einfach zu erfassen.

Als Injektorgröße werden wenigstens eine der Größen Schließzeitpunkt, Öffnungszeitpunkt, Schließdauer, Einspritzmenge, Schaltzeitpunkt, Abhebezeitpunkt des Injektors aus der Ansteuergröße ermittelt. Diese Größen charakterisieren gut den Einspritzvorgang und repräsentieren mit großer Genauigkeit die eingespritzte Kraftstoffmenge.

### Kurze Beschreibung der Zeichnungen

Ausführungsbeispiele der Erfindung sind in der Zeichnung dargestellt und in der nachfolgenden Beschreibung näher erläutert. Diese zeigen:
- Figur 1: die wesentlichen Elemente eines Kraftstoffzumesssystems einer Brennkraftmaschine
- Figur2: die wesentlichen Elemente der erfindungsgemäßen Vorrichtung und
- Figur 3 und 4: jeweils eine Ausführungsform der erfindungsgemäßen Vorgehensweise.

### Ausführungsformen der Erfindung

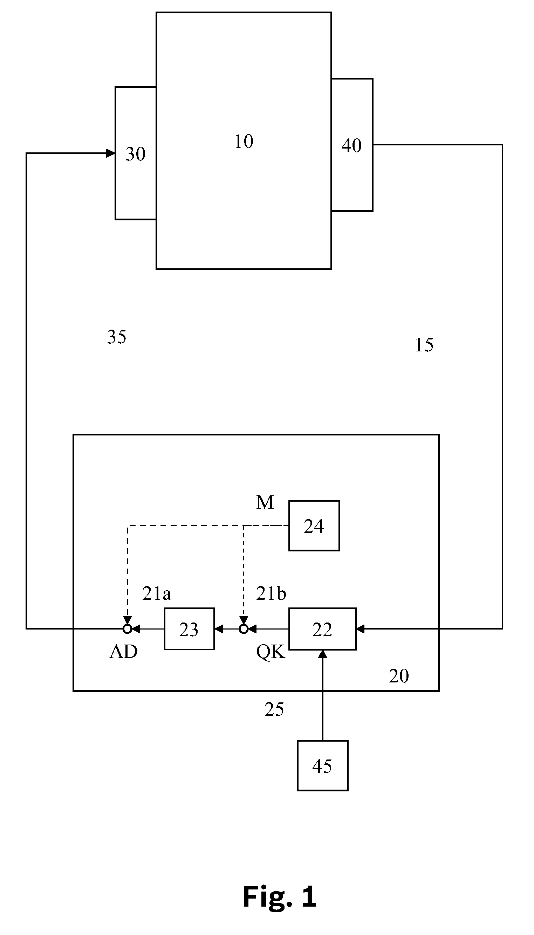

Die Figur 1 zeigt ein Blockdiagramm der wesentlichen Elemente eines Kraftstoffzumesssystems einer Brennkraftmaschine. Die Brennkraftmaschine 10 erhält von einer Kraftstoffzumesseinheit 30 eine bestimmte Kraftstoffmenge zu einem bestimmten Zeitpunkt zugemessen. Verschiedene Sensoren 40 erfassen Messwerte 15, die den Betriebszustand der Brennkraftmaschine charakterisieren, und leiten diese zu einem Steuergerät 20. Dem Steuergerät 20 werden ferner verschiedene Ausgangssignale 25, weitere Sensoren 45 zugeleitet. Die erfassten Messwerte 15 charakterisieren den Zustand der Brennkraftmaschine, wie beispielsweise die Drehzahl der Brennkraftmaschine. Das Steuergerät 20 berechnet ausgehend von diesen Messwerten 15 und weiteren Größen 25 Ansteuerimpulse 35, mit denen die Kraftstoffzumesseinheit 30 beaufschlagt wird. Hierzu beinhaltet das Steuergerät neben anderen nicht dargestellten Elementen eine Vorgabe 22 und ein Korrekturmittel 24.

Bei der Brennkraftmaschine handelt es sich vorzugsweise um eine direkteinspritzende Brennkraftmaschine. Prinzipiell ist die Vorgehensweise aber bei allen Brennkraftmaschinen, bei denen Kraftstoff dem Brennraum zugemessen wird, einsetzbar. Die Kraftstoffzumesseinheit 30 kann verschieden ausgestaltet sein. Vorzugsweise ist das Kraftstoffzumesssystem als so genanntes Common-Rail-System ausgebildet. Bei einem solchen Common-Rail-System wird der Kraftstoff von einer Hochdruckpumpe verdichtet und einem Rail zugeleitet. Von diesem Rail gelangt der Kraftstoff über Injektoren in die Brennräume der Brennkraftmaschine. Die Einspritzdauer, während der die Injektoren Kraftstoff zumessen, wird üblicher Weise durch ein Magnetventil oder ein Piezoaktor festgelegt. Das Magnetventil bzw. der Piezoaktor wird von dem Steuergerät über eine Endstufe derart angesteuert, dass es für eine bestimmten Ansteuerdauer mit einer Versorgungsspannung verbunden ist.

Das Steuergerät berechnet in bekannter Weise die in die Brennkraftmaschine einzuspritzende Kraftstoffmenge. Diese Berechnung erfolgt abhängig von verschiedenen Messwerten 15, wie beispielsweise der Drehzahl N, der Motortemperatur, dem tatsächlichen Einspritzbeginn und weiteren Größen 25, die den Betriebszustand des Fahrzeugs charakterisieren. Diese weiteren Größen sind beispielsweise die Stellung des Fahrpedals, die den Fahrerwunsch charakterisiert, oder der Druck und die Temperatur der Umgebungsluft. Diese Berechnung der einzuspritzenden Kraftstoffmenge QK erfolgt in der ersten Vorgabe 22. Das Steuergerät setzt dann die einzuspritzende Kraftstoffmenge in ein entsprechendes Ansteuersignal mit entsprechender Ansteuerdauer AD um, mit denen die Injektoren jeweils beaufschlagt werden. Dies erfolgt in der Umrechnung 23.

Problematisch bei solchen Kraftstoffzumesssystemen ist es, dass die elektrisch betätigten Ventile bzw. Piezoaktoren bei gleichem Ansteuersignal in besonderer gleicher Ansteuerdauer unterschiedliche Kraftstoffmengen zumessen können.

Deshalb sind Kalibrierverfahren vorgesehen, die ausgehend von bestimmten Größen ein Merkmal M bestimmen, dass zur Kalibrierung des Injektors verwendet wird.

Ein solches Kalibrierverfahren beinhaltet das Korrekturmittel 24. Als Ausgangsignal stellt dieses das Merkmal M bereit. Mit diesem Merkmal M wird die Einspritzmenge QK oder die Ansteuerdauer AD korrigiert. Dies kann derart erfolgen, dass der Wert M in einem Verknüpfungspunkt 21a bzw. 21b zu der Einspritzmenge QK oder zu der Ansteuerdauer AD addiert wird. Dies bedeutet die Einspritzmenge QK wird um den Wert M erhöht oder erniedrigt bzw. die Ansteuerdauer wird um den Wert M verlängert oder verkürzt. Alternativ kann auch eine multiplikative Korrektur vorgesehen sein.

So sind beispielsweise Kalibrierverfahren bekannt, dies ausgehend von dem Strom, der durch den Injektor fließt, bestimmte, den Einspritzvorgang charakterisierende Injektorgrößen ermitteln. Beispielsweise kann durch Auswerten des Stroms, der durch den Injektor fließt, der Schließzeitpunkt, bei dem das Magnetventil schließt und damit der Einspritzvorgang beendet wird, der Öffnungszeitpunkt, bei dem das Magnetventil öffnet und der Einspritzzeitpunkt beginnt, die Schließdauer, d. h. der Zeitabstand zwischen Schließzeitpunkt und Öffnungszeitpunkt ermittelt. Dies kann beispielsweise dadurch erfolgen, dass sich der Strom oder Spannungsverlauf zu diesen Zeitpunkten ändern. Neben diesen Größen können auch noch andere Größen, wie der Abhebezeitpunkt des Injektors, d. h. der Zeitpunkt, bei dem sich die Nadel zu bewegen beginnt, ausgewertet werden. Ausgehend von einer oder mehreren dieser Größen wird dann ein Korrekturwert berechnet, mit dem die Ansteuerdauer so korrigiert wird, dass der jeweilige Injektor die gewünschte Kraftstoffmenge zum gewünschten Zeitpunkt zumisst. Dieser Korrekturwert wird auch als Merkmal verwendet.

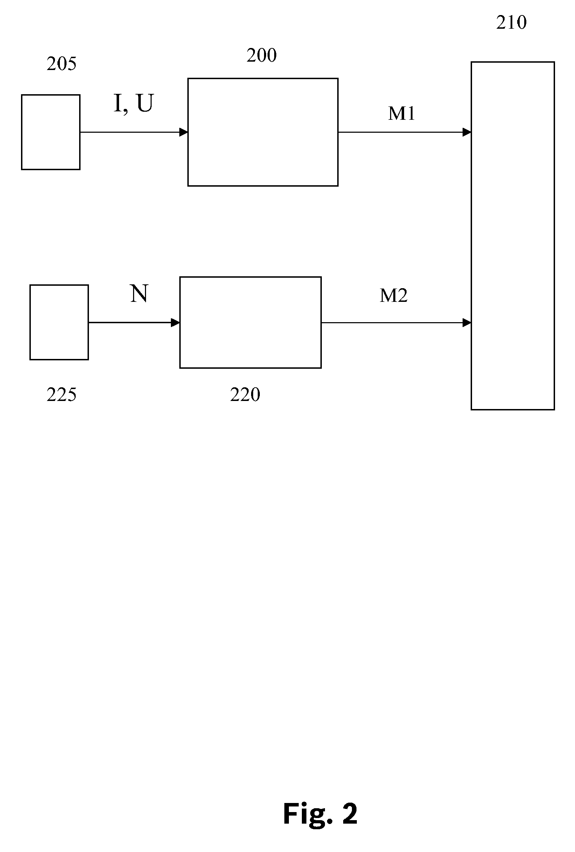

In Figur 2 ist eine entsprechende Vorgehensweise dargestellt. Ein erstes Kalibrierverfahren ist mit 200 bezeichnet. Dieses Kalibrierverfahren berechnet den Korrekturwert ein erstes Merkmal M1 zur Kalibrierung des Injektors ausgehend von einer Ansteuergröße. Die Ansteuergröße I, U wird von einer Signalvorgabe 205 bereitgestellt. Das Ausgangssignal der ersten Kalibrierung, das im Folgenden als erstes Merkmal M1 bezeichnet wird, gelangt zu einer Überwachung 210. Eine zweite Kalibrierung ist mit 220 bezeichnet. Diese wertet eine Motorgröße N aus, die von einer zweiten Signalvorgabe 225 bereitgestellt wird. Dieses zweite Kalibrierverfahren 220 stellt ein zweites Merkmal M2 zur Verfügung, das ebenfalls von der Überwachung 210 ausgewertet wird.

Das erste Kalibrierverfahren 200 berechnet ausgehend von einer Ansteuergröße ein erstes Merkmal M1, das zur Kalibrierung des Injektors verwendet wird. Dies bedeutet, das erste Kalibrierverfahren ermittelt beispielsweise ausgehend von dem Strom, der durch den Injektor fließt, oder aus dem Spannungssignal wenigstens eine den Einspritzvorgang charakterisierende Injektorgröße. Dabei handelt es sich beispielsweise um eine oder mehrere der Größen Einspritzmenge, Schließzeitpunkt, Öffnungszeitpunkt, Schließdauer, Schaltzeitpunkt und/oder Abhebezeitpunkt des Injektors. Ein oder mehrere dieser Größen werden durch Auswerten des Stroms, der durch den Injektor fließt, oder der Spannung, die an dem Injektor anliegt, ermittelt. So kann beispielsweise vorgesehen sein, dass ausgehend von der Ableitung des Stroms oder der Spannung der Öffnungszeitpunkt bzw. der Schließzeitpunkt des Magnetventils des Injektors erkannt wird. Vorzugsweise wird sowohl der Schließ- und auch der Öffnungszeitpunkt erkannt und damit die Schließdauer des Magnetventils ermittelt.

Bei einer weiteren Ausgestaltung wird ausgehend von dieser den Einspritzvorgang charakterisierenden Injektorgröße das Merkmal zur Kalibrierung des Injektors bestimmt. Hierzu kann beispielsweise vorgesehen sein, dass die Schließdauer mit einem erwarteten Wert, d. h. einem Sollwert verglichen wird, und bei einer Abweichung die Ansteuerdauer entsprechend korrigiert wird. Dies bedeutet, dass die Schließdauer auf einen Sollwert geregelt wird, wobei als Stellgröße die Ansteuergröße, mit der der Injektor angesteuert wird, dient. In diesem Fall dient als erstes Merkmal M1 die Stellgröße des Reglers.

Bei einer alternativen Ausführungsform kann vorgesehen sein, dass die Schließdauern der einzelnen Injektoren miteinander verglichen werden. Die Abweichung vom Mittelwert dient dann als erstes Merkmal M1.

Bei einer Ausgestaltung kann auch vorgesehen sein, dass ausgehend von dem Stromverlauf oder Spannungsverlauf direkt eine Injektorgröße, wie beispielsweise die Schließdauer des Magnetventils bzw. Injektors, ermittelt wird. Diese Injektorgröße dient als ein direktes Maß für die eingespritzte Kraftstoffmenge. Ausgehend von der Injektorgröße wird dann ein Korrekturwert berechnet, mit dem die Ansteuerdauer oder eine andere die Ansteuerdauer charakterisierende Größe derart korrigiert wird, dass die Injektorgröße den erwarteten Wert annimmt. Dieser Korrekturwert wird dann abgespeichert und zur Korrektur verwendet. Dieser Korrekturwert wird als erstes Merkmal M1 verwendet.

Das erste Kalibrierverfahren wird auch als strombasiertes Kalibrierverfahren bezeichnet werden. Alternativ zur Stromauswertung kann auch vorgesehen sein, dass das Spannungssignal entsprechend ausgewertet wird.

Das zweite Kalibrierverfahren 220 ist vorzugsweise als drehzahlbasiertes Kalibrierverfahren ausgebildet. Bei diesen Verfahren wird ausgehend von der Drehzahl N, das von der zweiten Signalvorgabe 225 bereitgestellt wird, ein Drehmoment des entsprechenden Zylinders berechnet wird. Bei einer ersten Ausführungsform ist nun vorgesehen, dass zwischen unterschiedlichen Einspritzmusters umgeschaltet wird, d. h. die gesamte Ansteuerdauer wird konstant gehalten und es wird abwechselnd die gesamte Kraftstoffmenge mit einer Teileinspritzung oder alternativ mit zwei oder mehreren Teileinspritzungen der Brennkraftmaschine zugemessen. Beispielsweise kann vorgesehen sein, dass zwischen Betrieb mit Voreinspritzung und einem Betrieb ohne Voreinspritzung umgeschaltet wird. Messen die Injektoren bei gleichem Ansteuersignal die gleiche Kraftstoffmenge zu, so ändert sich bei der Umschaltung das Drehmoment und damit die Drehzahl nicht. Tritt eine Abweichung auf, so wird ausgehend von dieser Abweichung ein Korrekturwert berechnet, der so ausgestaltet ist, dass das Drehmoment bzw. die Drehzahl beim Umschalten konstant bleibt. Dieser Korrekturwert dient als zweites Merkmal M2.

Erfindungsgemäß ist nun vorgesehen, dass die Überwachung mittels des zweiten Kalibrierverfahrens das erste Kalibrierverfahren auf ordnungsgemäße Funktion überwacht.

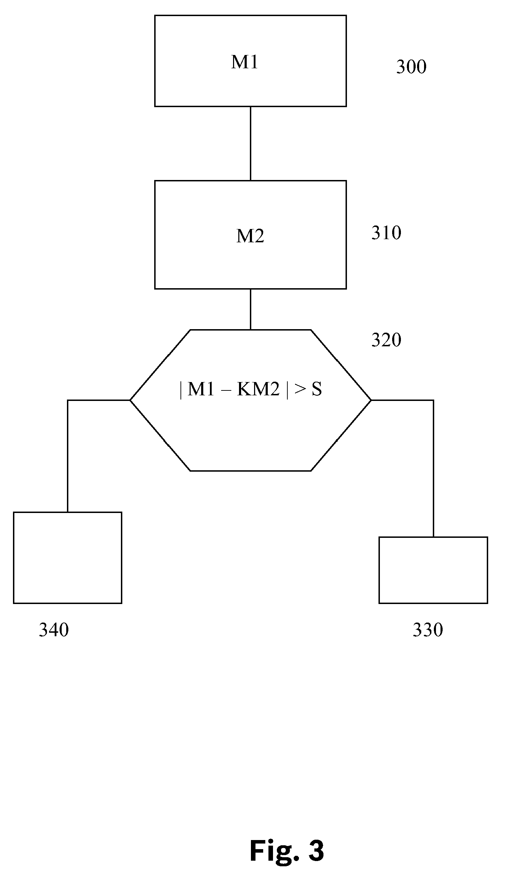

Eine erste Ausführungsform mit einer solchen Überwachung ist in Figur 3 dargestellt. In einem ersten Schritt 300 wird das erste Kalibrierverfahren durchgeführt und ein erster Korrekturwert berechnet, mit dem die Ansteuerung des Injektors zu korrigieren ist. Dieses erste Merkmal M1 charakterisiert die Abweichung der Ansteuerdauer von einem optimalen Wert. Dieser optimale Wert entspricht dem Wert, der üblicher Weise benötigt wird, um die gewünschte Kraftstoffmenge einzuspritzen. Dieses erste Merkmal M1 wird von dem Korrekturmittel 24 ermittelt. Es erfolgt aber keine Korrektur der Ansteuerimpulse 35.

In einem zweiten Schritt 310 erfolgt die Berechnung eines zweiten Merkmals M2 mittels des zweiten Kalibrierverfahrens. In einem dritten Schritt 320 wird die Differenz der beiden Merkmale M1- M2 berechnet. Weichen diese Merkmale um mehr als ein Schwellwert S voneinander ab, so wird in einem Schritt 330 auf Fehler erkannt. Ist dies nicht der Fall, so wird in Schritt 340 ein ordnungsgemäßer Betrieb erkannt.

Vorzugsweise wird lediglich der Betrag der Differenz der beiden Merkmale M1 und M2 mit einem Schwellwert S verglichen. Dies bedeutet ein Fehler wird erkannt, wenn die mit den beiden Kalibrierverfahren berechneten beiden Merkmale um mehr als ein Schwellwert voneinander abweichen.

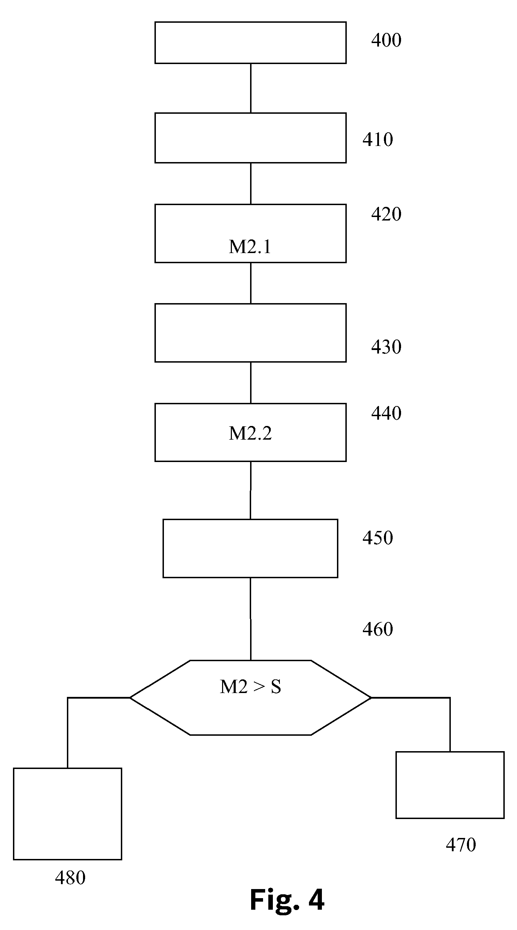

Eine zweite Ausführungsform ist in Figur 4 dargestellt. Bei dieser Ausführungsform ist vorgesehen, dass die Hauptfunktion, d. h. das erste Kalibrierverfahren kalibriert mit dem ausgewählten Betriebspunkt, die das Ansteuersignal und damit die eingespritzte Kraftstoffmenge. Zur Diagnose wird dann abwechselnd eine Einfacheinspritzung und eine Mehrfacheinspritzung, mit der durch die Hauptfunktion gelernten Ansteuerdauern abgesetzt. Dies wird bei einem vorteilhaften Betriebspunkt, z. B. niederer Drehzahl, keine Klimaanlage an, für eine bestimmte Anzahl von Arbeitsspielen durchgeführt. Aus dem Drehzahlsignal wird für jede Verbrennung das zweite Merkmal M2 berechnet. Anschließend wird die Differenz zwischen dem Merkmal der Einfach- und Mehrfacheinspritzung gebildet und über eine bestimmte Anzahl von Arbeitsspielen gemittelt. Überschreitet diese Differenz eine bestimmte applizierbare Schwelle, so wird die Hauptkalibrierfunktion als fehlerhaft erkannt.

Diese Vorgehensweise ist in Figur 4 detaillierter dargestellt. In einem ersten Schritt 400 wird das erste Kalibrierverfahren durchgeführt und das erste Merkmal M1 berechnet und zur Korrektur des Ansteuersignals 35 verwendet. In Schritt 410 wird überprüft, ob ein geeigneter Betriebspunkt zur Diagnose vorliegt. Solche geeigneten Betriebspunkte sind insbesondere Betriebspunkte mit niederer Drehzahl, bei denen zusätzliche Verbraucher, wie beispielweise eine Klimaanlage abgeschaltet sind. Anschließend wird in Schritt 420 ein erster Wert M2.1 für das zweite Merkmal berechnet. Anschließend wird in Schritt 430 ein zweites Einspritzmuster gewählt. Bei diesem zweiten Einspritzmuster ist insbesondere vorgesehen, dass eine Einspritzung in mehrere Teileinspritzungen aufgeteilt wird. Anschließend wird in Schritt 440 ein zweiter Wert M2.2 für das zweite Merkmal ermittelt. In Schritt 450 erfolgt eine Mittelung der ersten und zweiten Werte des zweiten Merkmals. D. h. es wird ein Mittelwert über mehrere Messwerte des ersten Werts und des zweiten Werts des zweiten Merkmals bestimmt. Diese Mittelung kann bei einer vereinfachten Form auch weggelassen werden.

In der anschließenden Abfrage 460 wird überprüft, ob das zweite Merkmal M2, insbesondere das gemittelte zweite Merkmal größer als ein Schwellwert S ist. Ist dies der Fall, so wird in Schritt 470 auf Fehler erkannt bzw. wenn dies nicht der Fall ist, in 480 auf ordnungsgemäßen Betrieb erkannt.

Erfindungsgemäß ist also vorgesehen, dass die Ansteuersignale mittels des ersten Kalibrierverfahrens korrigiert werden. Zur Kontrolle der Funktionsweise des ersten Kalibrierverfahrens ist vorgesehen, dass mittels eines zweiten Kalibrierverfahrens Korrekturwerte ermittelt werden. Erkennt das zweite Kalibrierverfahren, dass eine weitere Korrektur notwendig ist, so wird ein Fehler im Bereich des ersten Kalibrierverfahrens erkannt.

Erfindungsgemäß ist dabei vorgesehen, dass mittels des zweiten Kalibrierverfahrens nicht vollständig durchgeführt wird sondern lediglich überwacht wird, ob ein Signal beim Übergang zwischen einer Mehrfacheinspritzung zu einer Einfacheinspritzung sich wesentlich ändert, d. h. es ist beispielsweise ausreichend als Merkmal, diesem Verfahren lediglich das Drehzahlsignal bzw. das Drehmoment zu betrachten und zu überprüfen, ob sich dieses bei einem Wechsel zwischen Mehrfach- und Einfacheinspritzung ändert. Auch kann vorgesehen sein, dass nicht zwischen einer Einfach- und einer Mehrfacheinspritzung umgeschaltet wird sondern das zwischen zwei Mehrfacheinspritzungen mit unterschiedlichen Anzahlen von Mehrfacheinspritzungen umgeschaltet wird, d. h. in allgemeiner Form werden zwei Merkmalwerte bei unterschiedlichen Einspritzmustern bestimmt. Weichen diese Merkmale voneinander ab, so wird auf Fehler im ersten Kalibrierverfahren entschieden. Bei dieser Ausführungsform wird als zweites Merkmal ein Signal verwendet, dass das von der Brennkraftmaschine bereitgestellte bzw. abgegebene Drehmoment charakterisiert. Beispielsweise kann direkt das gemessene oder berechnete Drehzahlsignal verwendet werden. Alternativ kann auch eine Größe, die ausgehend von zumindestens dem Drehzahlsignal berechnet wird, als zweites Merkmal verwendet werden.

Beiden Ausführungsformen ist gemeinsam, dass mittels eines drehzahlbasierten Kalibrierverfahrens ein strombasiertes Kalibrierverfahren überwacht wird. Da die beiden Verfahren auf unterschiedlichen Eingangsgrößen basieren, können Fehler mit sehr hoher Wahrscheinlichkeit erkannt werden.

## Patentansprüche

1. Verfahren zur Ansteuerung eines Injektors in einer Kraftstoffeinspritzanlage einer Brennkraftmaschine, wobei mittels eines ersten Kalibrierverfahrens (200) ausgehend von einer Ansteuerkenngröße eine den Einspritzvorgang charakterisierende Injektorkenngröße ermittelt wird, und dass ausgehend von dieser Injektorkenngröße ein erstes Merkmal (M1) zur Kalibrierung des Injektors bestimmt wird, **dadurch gekennzeichnet, dass** ein zweites Kalibrierverfahren (M2) ausgehend von einer Motorkenngröße (N) ein zweites Merkmal (M2) zur Kalibrierung des Injektors bestimmt wird und das ausgehend von dem zweiten Merkmal das erste Kalibrierverfahren überwacht wird.

2. Verfahren nach Anspruch 1, **dadurch gekennzeichnet, dass** bei erfolgter Kalibrierung mittels des ersten Kalibrierverfahrens ein Fehler erkannt wird, wenn das zweite Merkmal (M2) des zweiten Kalibrierverfahrens größer als ein Schwellenwert ist.

3. Verfahren nach Anspruch 2, **dadurch gekennzeichnet, dass** das zweite Merkmal das bereitgestellte Drehmoment charakterisiert.

4. Verfahren nach Anspruch 1, **dadurch gekennzeichnet, dass** ein Fehler erkannt wird, wenn die beiden Merkmale um mehr als ein Schwellenwert voneinander abweichen.

5. Verfahren nach Anspruch 1, **dadurch gekennzeichnet, dass** es sich bei der Ansteuergröße um den Strom, der durch den Injektor fließt oder die Spannung, die am Injektor anliegt, handelt.

6. Verfahren nach Anspruch 1, **dadurch gekennzeichnet, dass** es sich bei der Injektorgröße um wenigstens eine der Größen Einspritzmenge, SchließZeitpunkt, Öffnungszeitpunkt, Schließdauer, Schaltzeitpunkt, Abhebezeitpunkt des Injektors handelt.

7. Vorrichtung zur Ansteuerung eines Injektors in einer Kraftstoffeinspritzanlage einer Brennkraftmaschine, mit Mitteln, die mittels eines ersten Kalibrierverfahrens (200) ausgehend von einer Ansteuerkenngröße ein den Einspritzvorgang charakterisierendes Injektorkenngröße ermitteln, und die ausgehend von dieser Kenngröße ein erstes Merkmal (M1) zur Kalibrierung des Injektors bestimmen, **dadurch gekennzeichnet, dass** Mittel vorgesehen sind, die Mittels eines zweiten Kalibrierverfahrens (M2) ausgehend von einer Motorkenngröße (N) ein zweites Merkmal (M2) zur Kalibrierung des Injektors bestimmen und die ausgehend von dem zweiten Merkmal das erste Kalibrierverfahren überwachen.

## Claims

1. Method for actuating an injector in a fuel injection system of an internal combustion engine, wherein an injector characteristic variable which characterizes the injection process is obtained by means of a first calibration method (200) on the basis of an actuation characteristic variable, and in that on the basis of this injector characteristic variable a first feature (M1) for calibrating the injector is determined, **characterized in that** a second calibration method (M2), on the basis of an engine characteristic variable (N), a second feature (M2) for calibrating the injector is determined and **in that** the first calibration method is monitored on the basis of the second feature.

2. Method according to Claim 1, **characterized in that** when calibration has taken place by means of the first calibration method a fault is detected if the second feature (M2) of the second calibration method is larger than a threshold value.

3. Method according to Claim 2, **characterized in that** the second feature characterizes the torque which is made available.

4. Method according to Claim 1, **characterized in that** a fault is detected if the two features differ from one another by more than a threshold value.

5. Method according to Claim 1, **characterized in that** the actuation variable is the current which flows through the injector or the voltage which is present at the injector.

6. Method according to Claim 1, **characterized in that** the injector variable is at least one of the variables of the injection quantity, closing time, opening time, closing duration, switching time or lift-off time of the injector.

7. Device for actuating an injector in a fuel injection system of an internal combustion engine, having means which determine, by means of a first calibration method (200) on the basis of an actuation characteristic variable, an injector characteristic variable which characterizes the injection process and which determine, on the basis of this characteristic variable, a first feature (M1) for calibrating the injector, **characterized in that** means are provided which determine, by means of a second calibration method (M2) on the basis of an engine characteristic variable (N), a second feature (M2) for calibrating the injector and which monitor the first calibration method on the basis of the second feature.

## Revendications

1. Procédé de commande d'un injecteur dans une installation d'injection de carburant d'un moteur à combustion interne, dans lequel, au moyen d'un premier procédé d'étalonnage (200), à partir d'une grandeur caractéristique de commande, une grandeur caractéristique d'injecteur caractérisant l'opération d'injection est déterminée, et en ce qu'à partir de cette grandeur caractéristique, une première caractéristique (M1) pour l'étalonnage de l'injecteur est déterminée, **caractérisé en ce qu'**un deuxième procédé d'étalonnage (M2), à partir d'une grandeur caractéristique du moteur (N), une deuxième caractéristique (M2) pour l'étalonnage de l'injecteur est déterminée et **en ce qu'**à partir de la deuxième caractéristique, le premier procédé d'étalonnage est surveillé.

2. Procédé selon la revendication 1, **caractérisé en ce que** lorsque l'étalonnage a été effectué au moyen du premier procédé d'étalonnage, une erreur est reconnue si la deuxième caractéristique (M2) du deuxième procédé d'étalonnage est supérieure à une valeur seuil.

3. Procédé selon la revendication 2, **caractérisé en ce que** la deuxième caractéristique caractérise le couple fourni.

4. Procédé selon la revendication 1, **caractérisé en ce qu'**une erreur est reconnue si les deux caractéristiques s'écartent de plus d'une valeur seuil l'une de l'autre.

5. Procédé selon la revendication 1, **caractérisé en ce que** la grandeur de commande est le courant qui passe à travers l'injecteur ou la tension appliquée à l'injecteur.

6. Procédé selon la revendication 1, **caractérisé en ce que** la grandeur d'injecteur est au moins une grandeur constituée par la quantité d'injection, l'instant de fermeture, l'instant d'ouverture, la durée de fermeture, l'instant de commutation, ou l'instant de soulèvement de l'injecteur.

7. Dispositif de commande d'un injecteur dans une installation d'injection de carburant d'un moteur à combustion interne, comprenant des moyens qui déterminent, au moyen d'un premier procédé d'étalonnage (200) à partir d'une grandeur caractéristique de commande, une grandeur caractéristique d'injecteur caractérisant l'opération d'injection et qui déterminent à partir de ces grandeurs caractéristiques, une première caractéristique (M1) pour l'étalonnage de l'injecteur, **caractérisé en ce que** des moyens sont prévus, lesquels, au moyen d'un deuxième procédé d'étalonnage (M2), à partir d'une grandeur caractéristique du moteur (N), déterminent une deuxième caractéristique (M2) pour l'étalonnage de l'injecteur et lesquels surveillent le premier procédé d'étalonnage à partir de la deuxième caractéristique.
